(19) Europäisches Patentamt / European Patent Office / Office européen des brevets

(11) **EP 3 390 031 B1**

(12) **FASCICULE DE BREVET EUROPEEN**

(45) Date de publication et mention de la délivrance du brevet:
**04.12.2019 Bulletin 2019/49**

(21) Numéro de dépôt: **16825485.2**

(22) Date de dépôt: **13.12.2016**

(51) Int Cl.:
**B29D 30/30** *(2006.01)*     **B29D 30/44** *(2006.01)*

(86) Numéro de dépôt international:
**PCT/FR2016/053350**

(87) Numéro de publication internationale:
**WO 2017/103416 (22.06.2017 Gazette 2017/25)**

(54) **PROCÉDÉ ET INSTALLATION D'ENROULEMENT D'UNE BANDE DE GOMME SUR UNE FORME DE RÉVOLUTION**

VERFAHREN UND ANLAGE ZUM WICKELN EINES GUMMISTREIFENS AUF EINE UMDREHUNGSFORM

METHOD AND FACILITY FOR WINDING A RUBBER STRIP ONTO A FORM OF REVOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1562803**

(43) Date de publication de la demande:
**24.10.2018 Bulletin 2018/43**

(73) Titulaire: **Compagnie Générale des Etablissements Michelin**
**63000 Clermont-Ferrand (FR)**

(72) Inventeurs:
• **MARCET, Grégory**
**63040 Clermont-Ferrand Cedex 9 (FR)**
• **DUCROS, Thierry**
**63040 Clermont-Ferrand Cedex 9 (FR)**
• **RAVAT, Stéphane**
**63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
| | |
|---|---|
| JP-A- 2003 011 245 | US-A- 5 292 398 |
| US-A- 5 582 664 | US-A1- 2001 008 162 |
| US-A1- 2011 186 198 | US-A1- 2012 111 473 |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne le domaine de la fabrication de pneumatiques.

Elle concerne plus particulièrement un procédé et une installation d'enroulement d'une bande de gomme sur une forme de révolution, cette bande de gomme étant notamment destinée à servir de bande de roulement à apposer sur une ébauche de pneumatique.

Dans un procédé classique d'enroulement d'une bande de gomme sur une forme de révolution, on forme une bande de longueur prédéterminée qu'on entraîne vers la forme selon une direction longitudinale, puis on dispose la première extrémité de la bande, dite front avant, sur la forme, avant d'entraîner la forme pour enrouler la bande sur la forme.

Une fois la bande totalement enroulée sur la forme, on soude le front avant à l'autre extrémité de la bande, dite front arrière. Le plus souvent, avant de procéder à l'enroulement, on a au préalable découpé la bande en biseau afin d'augmenter la surface de contact entre les fronts avant et arrière de la bande et ainsi obtenir une meilleure tenue de la soudure.

En effet, il est important, une fois la bande de gomme enroulée autour de l'ébauche de pneumatique, que la soudure entre les fronts avant et arrière de la bande entrent dans des tolérances prédéfinies, sans quoi les performances finales du pneumatique en seraient affectées. En particulier, une jointure ouverte, superposée ou encore avec un décalage d'épaisseur entre les fronts n'est pas considérée comme acceptable.

On cherche donc à s'assurer qu'au terme de l'enroulement de la bande sur la forme, les fronts avant et arrière de la bande arrivent à des positions prédéterminées permettant d'assurer une soudure acceptable.

Cependant, la bande étant réalisée en gomme, qui est un matériau qui flue facilement, et qui en particulier se rétracte après sa découpe, on a constaté que la bande change de longueur dans l'intervalle de temps entre sa coupe et sa pose sur la forme.

De ce fait, une fois la bande enroulée autour de la forme, on s'aperçoit que les fronts avant et arrière ne se trouvent pas, au terme de l'enroulement de la bande sur la forme, aux positions désirées.

On connaît du document JP 2003 011245 un procédé d'enroulement d'une bande de gomme conforme à celui décrit ci-dessus dans lequel on appose en outre des marques de part et d'autre de la ligne de découpe de la bande pour en repérer le front avant et arrière. Ces marques servent à déterminer, une fois la bande enroulée sur la forme, si la soudure est acceptable.

Toutefois, un tel procédé permet seulement de déterminer si l'on obtient ou non une bande de bonne qualité, mais ne permet pas de résoudre le problème évoqué ci-dessus et d'obtenir une soudure acceptable au terme de chaque enroulement.

L'invention a donc pour but de limiter les effets du fluage de la bande de gomme lorsqu'on l'enroule sur la forme de révolution et éviter que la soudure du front avant et du front arrière ne présente des défauts, ou du moins entre dans des tolérances prédéfinies.

A cet effet, l'invention concerne un procédé d'enroulement d'une bande de gomme sur une forme de révolution, dans lequel :

- on forme une bande de longueur prédéterminée,
- on appose sur une première extrémité de la bande une première marque, dite marque de front avant, et sur une deuxième extrémité de la bande une seconde marque, dite marque de front arrière,
- on entraîne la bande vers la forme selon une direction longitudinale,
- on dispose la première extrémité de la bande sur la forme,
- on entraîne la forme pour enrouler la bande sur la forme,

**caractérisé en ce que**

- on synchronise, au cours d'une première étape, les entraînements de la bande et de la forme de façon que les vitesses de déplacement de la marque de front arrière et de la marque de front avant soient sensiblement identiques de manière à ne pas modifier la longueur de la bande,
- on pilote, au cours d'une deuxième étape, les entraînements de la bande et de la forme en fonction de la position angulaire de la forme à la fin de la première étape et de la position de la marque de front arrière de façon que les vitesses de déplacement de la marque de front arrière et de la marque de front avant varient l'une par rapport à l'autre de manière à compenser les variations de longueur de la bande.

Grâce à la deuxième étape au cours de laquelle on fait varier la vitesse de déplacement de la position de la marque de front arrière par rapport à celle de la marque avant, on compense la variation de longueur de la bande ayant eu lieu entre le moment où celle-ci est découpée et le moment où elle est posée sur la forme en l'étirant, ou en la faisant se rétracter.

De préférence, on cherche à faire en sorte qu'à la fin de cette deuxième étape, la longueur restante de bande à poser corresponde à la longueur de la fibre neutre de la bande rapportée sur la forme, de manière à éliminer les tensions résiduelles avant la fin de la pose.

Ainsi, les fronts avant et arrière de la bande se trouvent aux positions désirées au terme de l'enroulement de la bande sur la forme, ce qui évite qu'ils ne soient trop espacés, superposés ou encore qu'il y ait un décalage d'épaisseur entre les fronts.

On peut ainsi effectuer une soudure des fronts arrière et avant qui soit de bonne qualité, et ce à chaque enroulement.

Selon un mode de réalisation particulier de l'invention,

- on forme la bande par découpe d'une laize de gomme continue de manière à former des bandes successives amont et aval, et
- on marque simultanément l'extrémité amont de la bande aval et l'extrémité aval de la bande amont, de façon que la marque apposée sur l'extrémité amont de la bande aval corresponde à la marque de front arrière de la bande aval et que la marque apposée sur l'extrémité aval de la bande amont corresponde à la marque de front avant de la bande amont.

Ceci permet de répéter l'opération de marquage de façon simple et rapide.

Selon un mode de réalisation particulier de l'invention, la première extrémité de la bande étant disposée sur une première position prédéterminée de la forme, dite position de référence, la fin de la première étape est déterminée par la détection de la marque de front avant à une deuxième position prédéterminée sur la forme, dite position de détection.

De préférence, la position de détection et la position de référence sont séparés sur la forme par un angle A prédéterminé compris entre 10° et 90°.

Le choix de cette gamme d'angle permet de faire en sorte qu'à la fin de la première étape, la bande de gomme adhère bien à la forme de révolution et ne risque pas de se décoller au cours de la deuxième étape.

Pour réaliser une synchronisation des entraînements de la bande et de la forme permettant de s'assurer que la longueur de la bande ne varie pas au cours de la première étape :

- N étant une vitesse angulaire de rotation prédéterminée de la forme,
- $E_1$ étant la longueur de la bande entre les marques de front arrière et de front avant, et
- D étant l'angle du secteur s'étendant entre la marque de front arrière et la marque de front avant que l'on souhaite obtenir une fois la bande entièrement enroulée sur la forme,

la vitesse $V_1$ de déplacement de la marque de front arrière au cours de la première étape est déterminée par la relation suivante :

$$V_1 = N * E_1 / (360 - D).$$

De préférence, la première extrémité de la bande étant disposée sur une première position prédéterminée de la forme, dite position de référence, la fin de la deuxième étape correspond au moment où la forme a parcouru un secteur d'angle supplémentaire B prédéterminé et doit encore parcourir un secteur d'angle supplémentaire C prédéterminé avant de revenir à la position de référence.

De préférence, l'angle B est compris entre 90° et 260°.

Le choix de cette gamme d'angle permet de faire en sorte que le secteur correspondant au déroulement de la deuxième étape soit suffisamment grand pour que l'on puisse corriger la variation de longueur de la bande au cours de la deuxième étape par rétractation ou allongement de la bande.

De préférence, l'angle C est compris entre 90° et 180°.

Le choix de cette gamme d'angle permet de faire en sorte qu'à la fin de la deuxième étape, le secteur correspondant à la longueur de la partie de la bande restant à enrouler autour de la forme est suffisamment grand pour que l'on puisse éliminer les tensions résiduelles dans la bande avant la fin de l'enroulement.

Pour faire varier la vitesse de déplacement de la marque de front avant par rapport à la vitesse de déplacement de la marque de front arrière de manière à compenser efficacement les variations de longueur de la bande au cours de la deuxième étape :

- N étant une vitesse angulaire de rotation prédéterminée de la forme,

- $E_2$ étant une variable correspondant à la longueur de la partie de la bande restant à enrouler autour de la forme au cours de la deuxième étape,
- $\Omega$ étant l'angle de rotation de la forme à la fin de la première étape,
- $L_0$ étant la longueur de la fibre neutre de la bande,

la vitesse $V_2$ de déplacement de la marque de front arrière au cours de la deuxième étape est déterminée par la relation suivante :

$$V_2 = N * [E_2 - (C* L_0/360) / (360 - \Omega - C - D)].$$

De cette manière, à la fin de cette deuxième étape, la longueur restante de bande à poser correspond à la longueur de la fibre neutre de la bande rapportée sur la forme, soit une longueur égale à $(C* L_0/360)$, ce qui permet d'éliminer les tensions résiduelles avant la fin de la pose.

Avantageusement, on synchronise, au cours d'une troisième étape, les entraînements de la bande et de la forme de manière à éliminer les tensions résiduelles dans la bande.

De manière à éliminer efficacement les tensions résiduelles dans la bande au cours de la troisième étape :

- N étant une vitesse angulaire de rotation prédéterminée de la forme,
- $L_0$ étant la longueur de la fibre neutre de la bande,

la vitesse d'entraînement $V_3$ de la bande lors de la troisième étape est déterminée par la relation suivante :

$$V_3 = N * L_0 /360$$

Afin de vérifier que les marques de front arrière et de front avant atteignent les positions prédéterminées souhaitées à la fin de l'enroulement de la bande sur la forme, à la fin de la troisième étape, on détermine la position des marques de front avant et de front arrière et on compare l'angle du secteur qui les sépare à un angle D souhaité.

L'invention concerne également une installation d'enroulement d'une bande de gomme sur une forme de révolution, comprenant :

- un dispositif de formation d'une bande de longueur prédéterminée,
- un dispositif d'apposition, sur une première extrémité de la bande, d'une première marque, dite marque de front avant, et sur une deuxième extrémité de la bande une seconde marque, dite marque de front arrière,
- un premier dispositif d'entraînement de la bande vers la forme selon une direction longitudinale,
- un dispositif de préhension apte à disposer la première extrémité de la bande sur la forme,
- un deuxième dispositif d'entraînement de la forme pour enrouler la bande sur la forme,

**caractérisé en ce qu'elle** comprend en outre :

- un dispositif de synchronisation, synchronisant, au cours d'une première étape, le premier dispositif d'entraînement et le deuxième dispositif d'entraînement de façon que les vitesses de déplacement de la marque de front arrière et de la marque de front avant soient sensiblement identiques de manière à ne pas modifier la longueur de la bande,
- un dispositif de pilotage pilotant, au cours d'une deuxième étape, le premier dispositif d'entraînement et le deuxième dispositif d'entraînement en fonction de la position angulaire de la forme à la fin de la première étape et de la position de la marque de front arrière de façon que les vitesses de déplacement de la marque de front arrière et de la marque de front avant varient l'une par rapport à l'autre de manière à compenser les variations de longueur de la bande.

Selon un mode de réalisation préféré de l'invention, le dispositif de pilotage comprend en outre un capteur de détection de la position de la marque de front avant et un capteur de position angulaire de la forme.

Selon un mode de réalisation préféré de l'invention, le dispositif de pilotage comprend en outre un capteur de position en temps réel de la marque de front arrière.

Selon un mode de réalisation préféré de l'invention, le dispositif de pilotage comprend un contrôleur pilotant la vitesse des premier et deuxième dispositifs d'entraînement en fonction des informations reçues de la part du capteur de détection, du capteur de position angulaire et du capteur de position en temps réel de la marque de front arrière.

Avantageusement, le capteur de position en temps réel de la marque de front arrière est disposé sur le dispositif de préhension.

L'invention sera mieux comprise à la lecture de la description qui va suivre des figures annexées, qui sont fournies à titre d'exemples et ne présentent aucun caractère limitatif, dans lesquelles :

- la figure 1 est une vue de côté d'une installation d'enroulement d'une bande de gomme selon un mode de réalisation particulier de l'invention ;
- la figure 2 est une vue en perspective d'une bande de gomme après avoir été marquée par l'installation de la figure 1 ;
- la figure 3 est un schéma représentant une bande de gomme et une forme de révolution d'une installation selon l'invention ;
- la figure 4 est un schéma représentant la bande de gomme de la figure 3 enroulée sur la forme de révolution.
- les figures 5 à 12 représentent l'installation de la figure 1 dans différentes configurations de fonctionnement.

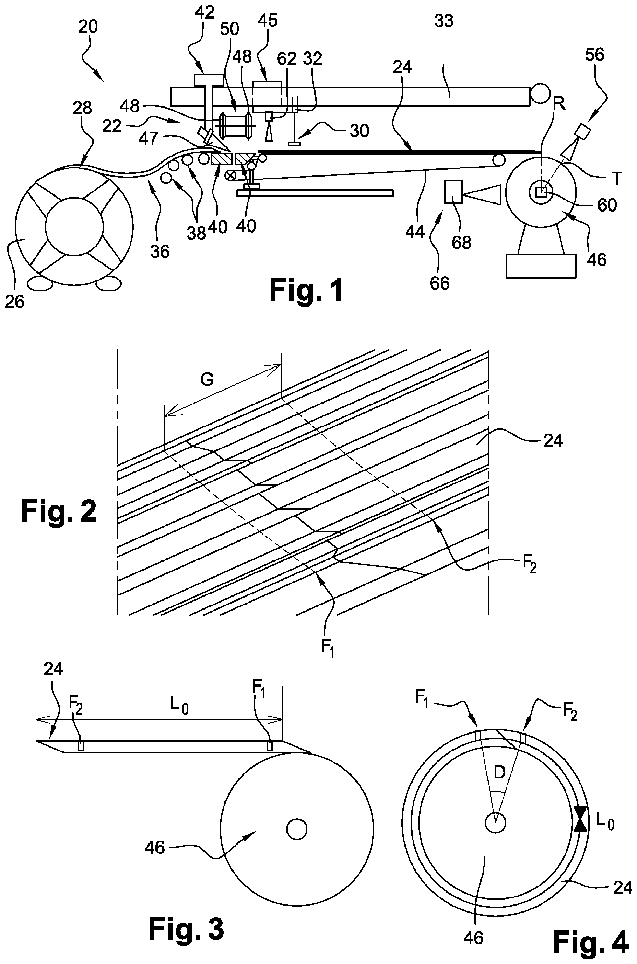

On a représenté à la figure 1 une installation 20 d'enroulement d'une bande de gomme selon un mode de réalisation particulier de l'invention.

Cette installation 20 comprend un dispositif de formation 22 d'une bande de gomme 24 d'une longueur prédéterminée.

Le dispositif de formation 22 comprend une bobine 26 depuis laquelle est déroulée une laize 28 de gomme. La gomme constituant la laize 28 est par exemple choisie de manière à ce que la bande de gomme 24 puisse servir de bande de roulement à apposer sur une ébauche de pneumatique.

L'installation 20 comprend en outre un dispositif de préhension 30 apte à se saisir d'une extrémité aval $e_1$ de la laize 28, qui correspond, comme on le verra plus loin, au front avant de la bande de gomme 24 de longueur prédéterminée que l'on veut former.

Ce dispositif de préhension 30 comprend un transporteur 32 se déplaçant le long d'un rail 33 et muni par exemple de ventouses 34 assurant la fonction de saisie de l'extrémité aval de la laize 28. D'autres moyens de préhension peuvent toutefois être envisagés, comme par exemple des pinces.

Pour dérouler la bobine 26, le transporteur 32 saisit l'extrémité aval $e_1$ de la laize 28 et l'amène vers un centreur 36 du dispositif de formation 22 muni de rouleaux 38 qui guident la laize 28 jusqu'à des tables à vide 40 d'un système de découpe 42 que l'on décrira plus bas.

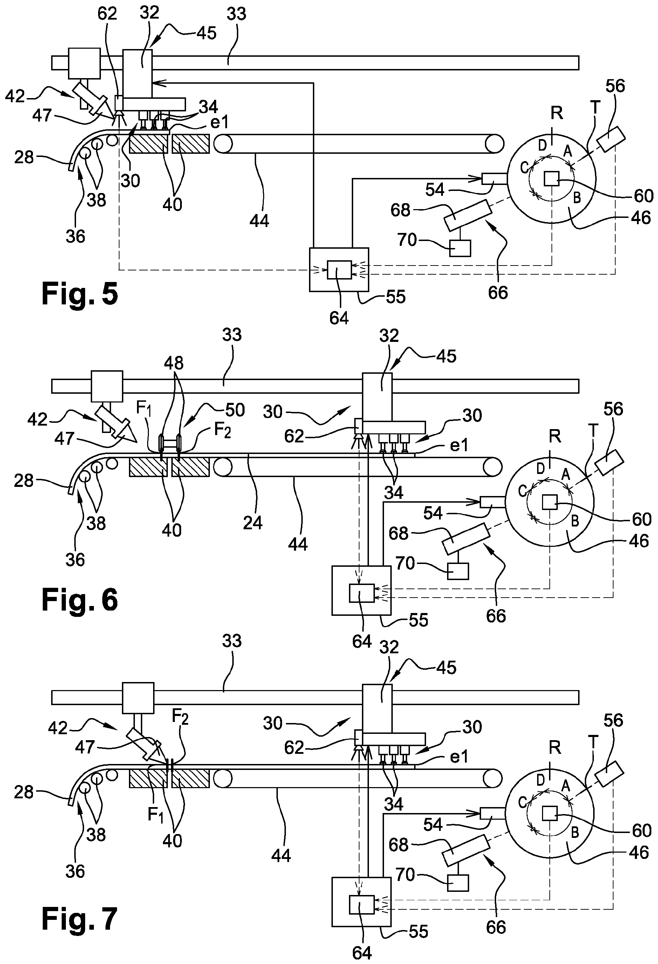

A ce stade du procédé selon l'invention, l'installation 20 se retrouve dans la configuration représentée à la figure 5.

Puis, le transporteur 32 continue à entraîner l'extrémité aval $e_1$ jusqu'à un tapis 44 adjacent aux tables à vide 40.

Le tapis 44 s'étend selon une direction longitudinale et fait partie, ainsi que le transporteur 32, d'un premier dispositif d'entraînement 45 entraînant la laize 28 (à partir de laquelle sera formée la bande 24) vers une forme 46 de révolution sur laquelle la bande 24 est destinée à être enroulée.

Le tapis 44 et le transporteur 32, qui se déplacent sensiblement à la même vitesse, déplacent la laize 28 vers la forme 46 jusqu'à ce que la distance séparant l'extrémité aval $e_1$ de la laize 28 et une lame 47 du système de découpe 42 soit sensiblement égale à la longueur $L_0$ désirée (et donc prédéterminée) de la bande 22 de gomme que l'on désire former.

Cette longueur $L_0$, qui correspond à la longueur de la fibre neutre de la future bande 24, est représentée notamment à la figure 2.

Les tables à vide 40 s'enclenchent alors pour maintenir, par aspiration, en position la partie de la laize 28 se trouvant sous la lame 47 et ainsi assurer une découpe nette.

On notera que la lame 47 est disposée de sorte à se trouver sensiblement à égale distance de deux rouleaux de marquage 48 d'un dispositif d'apposition de marques 50.

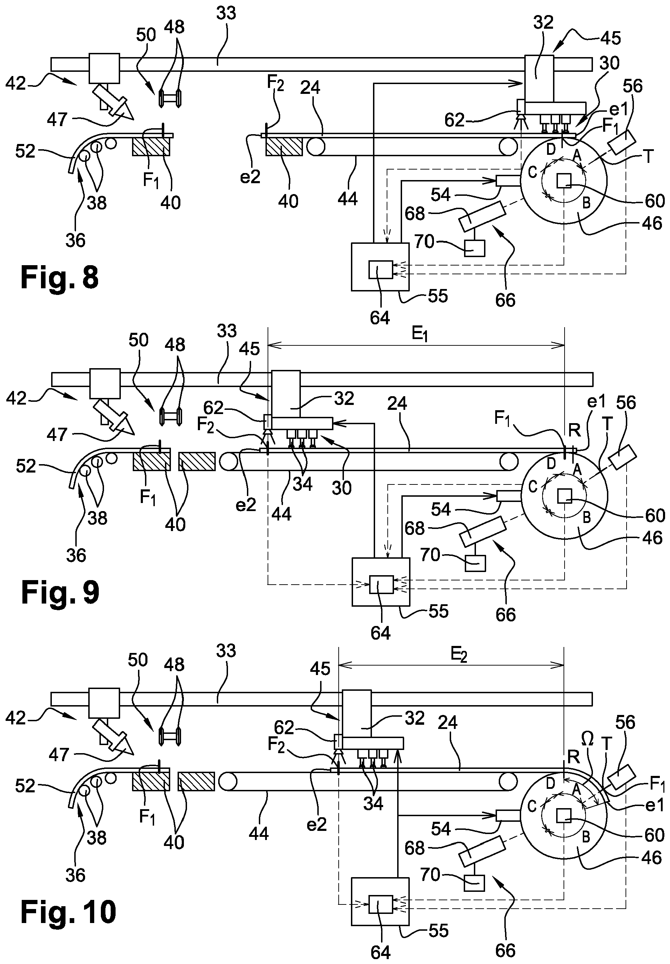

En effet, avant la découpe destinée à former à partir de la laize 28 deux bandes successives, une bande amont 52 et une bande aval 24 (voir figures 8 à 12), le dispositif d'apposition de marques 50 marque simultanément, à l'aide des rouleaux de marquage 48, l'extrémité amont $e_2$ de la future bande aval 24 et l'extrémité aval de la future bande amont 52.

A ce stade du procédé selon l'invention, l'installation se retrouve dans la configuration représentée à la figure 6.

La marque apposée sur l'extrémité amont de la bande aval 24 est appelée marque de front arrière $F_2$ de la bande aval 24 et la marque apposée sur l'extrémité aval de la bande amont 52 est appelée marque de front avant $F_1$ de la bande amont. Du fait du caractère cyclique du procédé de l'invention, on comprend que sur les figures 5 à 12, la bande 24 a préalablement été marquée et son front avant, ou son extrémité aval $e_1$, comprend une marque de front avant $F_1$.

Les deux rouleaux de marquage 48 sont espacés d'une distance G constante.

De ce fait, comme on peut le voir à la figure 2 sur laquelle on a représenté une portion de la laize 28 après un marquage, la marque de front arrière $F_2$ de la bande aval 46 et la marque de front avant $F_1$ de la bande amont 44 sont espacées d'une distance G.

La distance G est choisie en fonction de l'épaisseur de gomme formant la laize 28. De préférence, la distance G est la même pour plusieurs gammes d'épaisseurs de gomme afin que l'installation 20 puisse être utilisée pour former des bandes de roulement pour diverses gammes de pneumatiques. Dans ce cas, la distance G choisie sera celle associée à l'épaisseur de gomme la plus importante de la gamme. Typiquement, pour les applications envisagées, l'épaisseur de la laize 28 est de l'ordre de 3 à 4 cm.

Une fois le marquage réalisé, le système de découpe 42 est actionné afin de couper la laize 28 de manière à ce que la ligne de découpe, représentée en pointillés sur la figure 2, se trouve sensiblement toujours à la même distance de la marque de front avant $F_1$ de la bande amont 52 d'une part, et de la marque de front arrière $F_2$ de la bande aval 24 d'autre part.

De préférence, et comme illustré à la figure 3, la coupe est faite en biseau afin d'augmenter la surface de contact entre les fronts avant et arrière de la bande et ainsi obtenir une meilleure tenue de la soudure en fin de procédé. La longueur de la partie biseautée est typiquement de l'ordre de 10 cm pour les applications envisagées.

A ce stade du procédé selon l'invention, l'installation se retrouve dans la configuration représentée à la figure 7.

Après la découpe, le tapis 44 et le transporteur 32 dont les ventouses 34 saisissent toujours l'extrémité aval $e_1$, entraînent la bande 24 ainsi formée vers la forme 46. La forme 46 a ici une section transversale circulaire.

La bande 24 est alors disposée par le transporteur 32 sur une première position prédéterminée de la forme, dite position de référence R.

A ce stade du procédé selon l'invention, l'installation se retrouve dans la configuration représentée à la figure 8.

Une fois la bande 24 déposée sur la forme 46, le transporteur 32 relâche l'extrémité aval $e_1$ de la bande 24 et vient saisir l'extrémité amont $e_2$ de la bande 24.

A ce stade du procédé selon l'invention, l'installation se retrouve dans la configuration représentée à la figure 9.

Puis, on commence à entraîner la forme 46 à l'aide d'un deuxième dispositif d'entraînement 54 pour enrouler la bande 24 sur la forme 46.

Durant cette première étape, un dispositif de synchronisation 55 synchronise le premier dispositif d'entraînement 45 et le deuxième dispositif d'entraînement 54 de façon que les vitesses de déplacement de la marque de front arrière $F_2$ et de la marque de front avant $F_1$ de la bande 24 soient sensiblement identiques.

Autrement dit, le dispositif de synchronisation 54 synchronise la vitesse d'avancement du tapis 44 et du transporteur 32 (qui avancent à la même vitesse), d'une part, et la vitesse de rotation de la forme 46 d'autre part.

De cette manière, la longueur de la bande 24 n'est pas modifiée au cours de cette première étape.

Plus précisément, durant la première étape,

- N étant une vitesse angulaire de rotation prédéterminée de la forme 46,
- $E_1$ étant la longueur de la bande 24 entre les marques de front arrière $F_2$ et de front avant $F_1$, et
- D étant l'angle du secteur s'étendant entre la marque de front arrière $F_2$ et la marque de front $F_1$ avant que l'on souhaite obtenir une fois la bande 24 entièrement enroulée sur la forme 46,

la vitesse $V_1$ de déplacement de la marque de front arrière $F_2$, c'est-à-dire la vitesse d'avancement du tapis 44 et du transporteur 32 au cours de la première étape, est déterminée par la relation suivante :

$$V_1 = N * E_1 / (360 - D).$$

A titre d'exemple, la vitesse $V_1$ est de l'ordre de 60 mètres par minute pour l'application envisagée.

L'angle D est représenté plus particulièrement sur la figure 3. Il s'agit d'une constante dépendante de la distance inter-marques G et de l'épaisseur de la laize 28. En effet, l'angle D est l'angle du secteur correspondant à la distance G rapportée sur le périmètre extérieur de la bande 24 une fois celle-ci posée sur la forme 46.

La fin de la première étape est déterminée par la détection de la marque de front avant $F_1$ à une deuxième position prédéterminée sur la forme 46, dite position de détection T. La fin de la première étape est illustrée par la figure 10.

La détection de la marque de front avant $F_1$ à la position de détection T est réalisée par un capteur de détection 56 disposé sur une partie fixe (non représentée) de l'installation 20.

De préférence, la position de détection T et la position de référence R sont séparées sur la forme 46 par un angle A prédéterminé compris entre 10° et 90°. Cette gamme d'angle permet en effet de s'assurer que la bande 24 ne se décolle pas de la forme 46 lors de l'étape suivante.

Une fois la position de détection T atteinte par la marque de front avant $F_1$, un dispositif de pilotage 55 (qui est dans le mode de réalisation de l'invention présenté ici confondu avec le dispositif de synchronisation 55) pilote, au cours d'une deuxième étape, le premier dispositif d'entraînement 45 et le deuxième dispositif d'entraînement 54 en fonction de la position angulaire de la forme 46 à la fin de la première étape et de la position de la marque de front arrière $F_2$.

La position angulaire de la forme 46 à la fin de la première étape correspond à la position angulaire de la forme 46 au moment où la marque de front arrière $F_2$ est détectée à la position de détection T.

On utilise ce paramètre car cette position angulaire, qui est en général proche de l'angle A, en diffère légèrement du fait de la modification de la longueur de la bande 24 entre sa découpe et son positionnement sur la forme 46.

Le plus souvent, on observe que comme la bande 24 se rétracte après la découpe, la position angulaire de la forme 46 à la fin de la première étape est supérieure de quelques degrés à l'angle A, car il a fallu faire tourner la forme davantage que si la bande 24 avait conservé sa longueur $L_0$ initiale.

On mesure la position angulaire de la forme 46 à la fin de la première étape par exemple au moyen d'un capteur de position angulaire 60.

De préférence, le capteur de position angulaire 60 mesure l'angle $\Omega$ de rotation de la forme au moment où le capteur de détection 56 détecte que la marque avant $F_1$ a atteint la position de détection T, cet angle étant mesuré par rapport à la position de référence R.

Ainsi, on mesure la position angulaire de la forme 46 de manière ponctuelle.

En revanche, la position de la marque de front arrière $F_2$ est obtenue en temps réel, c'est-à-dire dans la mesure du possible en continu, grâce à un capteur de position en temps réel 62, qui est par exemple une caméra montée sur le transporteur 32.

Le pilotage lors de la deuxième étape se fait de façon que les vitesses de déplacement de la marque de front arrière $F_2$ et de la marque de front avant $F_1$ varient l'une par rapport à l'autre de manière à compenser les variations de longueur de la bande 24. Le plus souvent, comme on observe que la bande 24 se rétracte après la découpe, durant la deuxième étape on étire la bande 24.

A cet effet, le dispositif de pilotage 55 comprend un contrôleur 64 pilotant la vitesse du premier dispositif d'entraînement 45 et du deuxième dispositif d'entraînement 54 en fonction des informations reçues de la part du capteurs de détection 56, du capteur de position angulaire 60 de la forme 46 et du capteur de position en temps réel 62 de la marque de front arrière $F_2$.

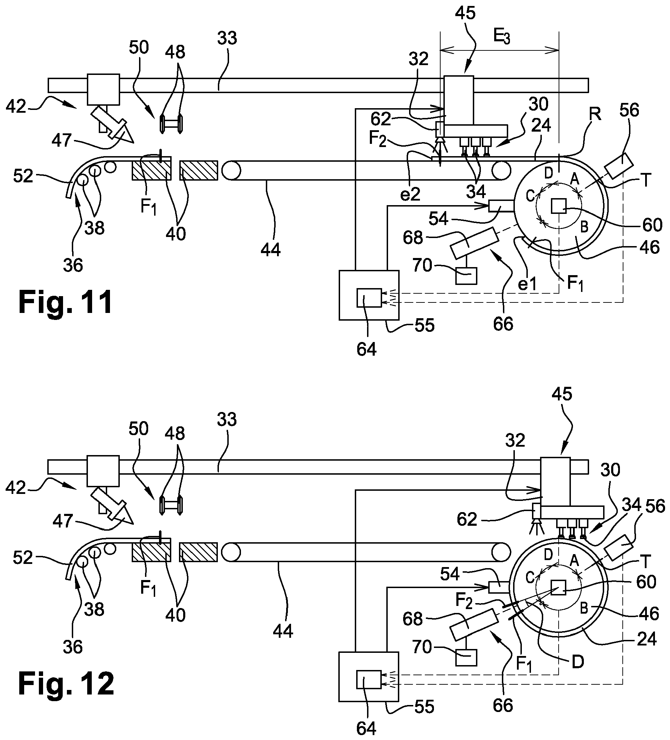

La deuxième étape se termine, comme illustré à la figure 11, au moment où la forme 46 a parcouru un secteur d'angle supplémentaire B prédéterminé et doit encore parcourir un secteur d'angle supplémentaire C prédéterminé avant de revenir à la position de référence R.

De préférence, l'angle B est compris entre 90° et 260°.

Le choix de cette gamme d'angle permet de faire en sorte que le secteur correspondant au déroulement de la deuxième étape soit suffisamment grand pour que l'on puisse efficacement corriger la variation de longueur de la bande 24.

Plus précisément, durant la deuxième étape :

- $E_2$ étant une variable correspondant à la longueur de la partie de la bande 24 restant à enrouler autour de la forme 46 au cours de la deuxième étape,

la vitesse $V_2$ de déplacement de la marque de front arrière $F_2$ au cours de la deuxième étape est déterminée par la relation suivante :

$$V_2 = N * [E_2 - (C* L_0/360) / (360 - \Omega - C - D)].$$

On notera que $E_2$ correspond également à la longueur de la portion de la bande 24 entre la marque de front arrière $F_2$ et la position de référence R, comme illustré sur la figure 10.

De cette manière, à la fin de cette deuxième étape, la longueur restante de bande à poser correspond à la longueur de la fibre neutre de la bande rapportée sur la forme, soit une longueur égale à $(C* L_0/360)$, ce qui permet d'éliminer les tensions résiduelles avant la fin de la pose.

Le calcul de la vitesse $V_2$ est par exemple effectué par le contrôleur 64 qui envoie un signal de commande correspondant au premier dispositif d'entraînement 45 et au deuxième dispositif d'entraînement 54.

On notera que de préférence ce même contrôleur 64 est en charge du calcul de la vitesse $V_1$ et de l'envoi d'un signal de commande correspondant aux premier et deuxième dispositifs d'entraînement 45, 54.

Au terme de la deuxième étape, la longueur de la bande 24 a été corrigée de manière à s'assurer qu'une fois la bande 24 entièrement enroulée sur la forme 46, le front avant $F_1$ et le front arrière $F_2$ se retrouvent aux positions désirées avant leur soudure.

Cependant, pour éliminer les tensions résiduelles dans la bande 24 dues à son allongement lors de la deuxième étape, on prévoit une troisième étape durant laquelle le dispositif de pilotage 55 synchronise les vitesses du premier dispositif d'entraînement 45 et du deuxième dispositif d'entrainement 54 de manière à éliminer les tensions résiduelles dans la bande 24 avant la fin de l'enroulement.

Au début de la troisième étape, illustrée par la figure 11, la forme 46 doit encore parcourir le secteur d'angle C.

De préférence, l'angle C est compris entre 90° et 180°.

Le choix de cette gamme d'angle permet de faire en sorte qu'à la fin de la deuxième étape (au début de la troisième), le secteur correspondant à la longueur de la partie de la bande 24 restant à enrouler autour de la forme 46 est suffisamment grand pour que l'on puisse éliminer les tensions résiduelles dans la bande 24 avant la fin de l'enroulement.

Plus précisément, au cours de la troisième étape,

- $E_3$ correspondant à la longueur de la partie de la bande 24 restant à enrouler autour de la forme 46 au cours de la troisième étape,

la vitesse d'entraînement $V_3$ de la bande lors de la troisième étape est déterminée par la relation suivante :

$$V_3 = N * E_3 / C \text{ avec } E_3 = C*L_0/360$$

On notera que $E_3$ correspond également à la longueur de la portion de la bande 24 entre la marque de front arrière $F_2$ et la position de référence R, comme illustré sur la figure 11.

Le calcul de la vitesse $V_3$ est par exemple effectué par le contrôleur 64 qui envoie un signal de commande correspondant au premier dispositif d'entraînement 45 et au deuxième dispositif d'entraînement 54.

A la fin de la troisième étape, la bande 24 est entièrement enroulée autour de la forme 46, comme illustré sur la figure 12.

Pour vérifier que les marques de front avant $F_1$ et de front arrière $F_2$ atteignent bien les positions désirées avant de les souder (le dispositif effectuant cette étape n'est pas représenté), on détermine, après la fin de la troisième étape, la position des marques de front avant $F_1$ et de front arrière $F_2$ et on compare l'angle du secteur qui les sépare à l'angle D souhaité.

Cette étape de vérification est par exemple effectuée par un dispositif de vérification 66 muni d'un capteur de vérification 68 apte à détecter la position des marques de front avant $F_1$ et de front arrière $F_2$ et de mesurer l'angle du secteur qui les sépare, et d'un comparateur 70 apte à comparer l'angle du secteur qui les sépare à l'angle D souhaité.

Par exemple, dans le mode de réalisation représenté sur les figures, on fait parcourir à la forme un secteur supplémentaire une fois la bande 24 enroulée pour faire passer les marques de front avant $F_1$ et de front arrière $F_2$ devant le capteur 68.

D'une manière générale, l'invention n'est pas limitée aux modes de réalisation présentés et d'autres modes de réalisation apparaîtront clairement à l'homme du métier.

On pourra par exemple envisager que plusieurs contrôleurs effectuent le calcul des vitesses durant les première, deuxième et troisième étapes au lieu d'un seul, et/ou prévoir des dispositifs de pilotage distincts pour piloter les premier et deuxième dispositifs d'entraînement au cours de chacune de ces étapes. Les dispositifs de synchronisation et de pilotage peuvent également être distincts.

## Revendications

**1.** Procédé d'enroulement d'une bande (24) de gomme sur une forme (46) de révolution, dans lequel :

- on forme une bande (24) de longueur prédéterminée,
- on appose sur une première extrémité de la bande (24) une première marque, dite marque de front avant ($F_1$), et sur une deuxième extrémité de la bande (24) une seconde marque, dite marque de front arrière ($F_2$),
- on entraîne la bande (24) vers la forme (46) selon une direction longitudinale,
- on dispose la première extrémité de la bande (24) sur la forme (46),
- on entraîne la forme (46) pour enrouler la bande (24) sur la forme (46),

**caractérisé en ce que**

- on synchronise, au cours d'une première étape, les entraînements de la bande (24) et de la forme (46) de façon que les vitesses de déplacement de la marque de front arrière ($F_2$) et de la marque de front avant ($F_1$) soient sensiblement identiques de manière à ne pas modifier la longueur de la bande (24),

- on pilote, au cours d'une deuxième étape, les entraînements de la bande (24) et de la forme (46) en fonction de la position angulaire de la forme (46) à la fin de la première étape et de la position de la marque de front arrière ($F_2$) de façon que les vitesses de déplacement de la marque de front arrière ($F_2$) et de la marque de front avant ($F_1$) varient l'une par rapport à l'autre de manière à compenser les variations de longueur de la bande (24)

2. Procédé d'enroulement selon la revendication 1, dans lequel :

- on forme la bande (24) par découpe d'une laize (28) de gomme continue de manière à former des bandes successives amont (52) et aval (24), et
- on marque simultanément l'extrémité amont de la bande aval (24) et l'extrémité aval de la bande amont (52), de façon que la marque apposée sur l'extrémité amont de la bande aval (24) corresponde à la marque de front arrière ($F_2$) de la bande aval et que la marque apposée sur l'extrémité aval de la bande amont (52) corresponde à la marque de front avant ($F_1$) de la bande amont (52).

3. Procédé d'enroulement selon la revendication 1 ou 2, dans lequel, la première extrémité de la bande (24) étant disposée sur une première position prédéterminée de la forme, dite position de référence (R), la fin de la première étape est déterminée par la détection de la marque de front avant ($F_1$) à une deuxième position prédéterminée sur la forme (46), dite position de détection (T).

4. Procédé d'enroulement selon la revendication 3, dans lequel la position de détection (T) et la position de référence (R) sont séparées sur la forme par un angle A prédéterminé compris entre 10° et 90°.

5. Procédé d'enroulement selon l'une quelconque des revendications précédentes, dans lequel,

- N étant une vitesse angulaire de rotation prédéterminée de la forme (46),
- $E_1$ étant la longueur de la bande (24) entre les marques de front arrière ($F_2$) et de front avant ($F_1$), et
- D étant l'angle du secteur s'étendant entre la marque de front arrière ($F_2$) et la marque de front avant ($F_1$) que l'on souhaite obtenir une fois la bande (24) entièrement enroulée sur la forme (46),

la vitesse $V_1$ de déplacement de la marque de front arrière ($F_2$) au cours de la première étape est déterminée par la relation suivante :

$$V_1 = N * E_1 / (360 - D).$$

6. Procédé d'enroulement selon l'une quelconque des revendications précédentes, dans lequel, la première extrémité de la bande (24) étant disposée sur une première position prédéterminée de la forme, dite position de référence (R), la fin de la deuxième étape correspond au moment où la forme (24) a parcouru un secteur d'angle supplémentaire B prédéterminé et doit encore parcourir un secteur d'angle supplémentaire C prédéterminé avant de revenir à la position de référence (R).

7. Procédé d'enroulement selon la revendication 6, dans lequel, l'angle B est compris entre 90° et 260°.

8. Procédé d'enroulement selon la revendication 7, dans lequel, l'angle C est compris entre 90° et 180°.

9. Procédé d'enroulement selon l'une quelconque des revendications 6 à 8, dans lequel,

- N étant une vitesse angulaire de rotation prédéterminée de la forme (46),
- $E_2$ étant une variable correspondant à la longueur de la partie de la bande (24) restant à enrouler autour de la forme (46) au cours de la deuxième étape,
- $\Omega$ étant l'angle de rotation de la forme (46) à la fin de la première étape,
- $L_0$ étant la longueur de la fibre neutre de la bande (24),

la vitesse $V_2$ de déplacement de la marque de front arrière ($F_2$) au cours de la deuxième étape est déterminée par la relation suivante :

$$V_2 = N * [E_2 - (C* L_0/360) / (360 - \Omega - C - D)].$$

10. Procédé d'enroulement selon l'une quelconque des revendications précédentes dans lequel on synchronise, au cours d'une troisième étape, les entraînements de la bande (24) et de la forme (46) de manière à éliminer les tensions résiduelles dans la bande (24).

11. Procédé d'enroulement selon les revendications 6 et 10 prises en combinaison, dans lequel,

- N étant une vitesse angulaire de rotation prédéterminée de la forme (46),
- $L_0$ étant la longueur de la fibre neutre de la bande,

la vitesse d'entraînement $V_3$ de la bande (24) lors de la troisième étape est déterminée par la relation suivante :

$$V_3 = N * L_0/360$$

12. Procédé d'enroulement selon la revendication 10 ou 11, dans lequel, à la fin de la troisième étape, on détermine la position des marques de front avant ($F_1$) et de front arrière ($F_2$) et on compare l'angle du secteur qui les sépare à un angle D souhaité.

13. Installation (20) d'enroulement d'une bande (24) de gomme sur une forme (46) de révolution, comprenant :

- un dispositif de formation (22) d'une bande (24) de longueur prédéterminée,
- un dispositif d'apposition (50), sur une première extrémité de la bande (24), d'une première marque, dite marque de front avant ($F_1$), et sur une deuxième extrémité de la bande (24) une seconde marque, dite marque de front arrière ($F_2$),
- un premier dispositif d'entraînement (45) de la bande (24) vers la forme (46) selon une direction longitudinale,
- un dispositif de préhension (30) apte à disposer la première extrémité ($E_1$) de la bande (24) sur la forme (46),
- un deuxième dispositif d'entraînement (54) de la forme (46) pour enrouler la bande (24) sur la forme (46),

**caractérisé en ce qu'elle** comprend en outre :

- un dispositif de synchronisation (55) synchronisant, au cours d'une première étape, le premier dispositif d'entraînement (45) et le deuxième dispositif d'entraînement (54) de façon que les vitesses de déplacement de la marque de front arrière ($F_2$) et de la marque de front avant ($F_1$) soient sensiblement identiques de manière à ne pas modifier la longueur de la bande (24),
- un dispositif de pilotage (55) pilotant, au cours d'une deuxième étape, le premier dispositif d'entraînement (45) et le deuxième dispositif d'entraînement (55) en fonction de la position angulaire de la forme (46) à la fin de la première étape et de la position de la marque de front arrière ($F_2$) de façon que les vitesses de déplacement de la marque de front arrière ($F_2$) et de la marque de front avant ($F_1$) varient l'une par rapport à l'autre de manière à compenser les variations de longueur de la bande (24).

14. Installation (20) d'enroulement selon la revendication 13, comprenant en outre un capteur de détection (56) de la position de la marque de front avant ($F_1$) et un capteur de position angulaire (60) de la forme (46).

15. Installation (20) d'enroulement selon la revendication 13 ou 14, dans laquelle le dispositif de pilotage (55) comprend un capteur de position en temps réel (62) de la marque de front arrière ($F_2$).

16. Installation (20) d'enroulement selon les revendications 14 et 15 prises en combinaison, dans laquelle le dispositif de pilotage (55) comprend un contrôleur (64) pilotant la vitesse des premier et deuxième dispositifs d'entraînement (45, 54) en fonction des informations reçues de la part du capteur de détection (56), du capteur de position angulaire (60) et du capteur de position en temps réel (62) de marque de front arrière ($F_2$).

17. Installation (20) d'enroulement selon la revendication 15 ou 16, dans laquelle le capteur de position en temps réel (62) de la marque de front arrière ($F_2$) est disposé sur le dispositif de préhension (30).

**Patentansprüche**

1. Verfahren zum Wickeln eines Gummistreifens (24) auf eine Rotationsform (46), wobei:

   - ein Streifen (24) von vorbestimmter Länge ausgebildet wird,
   - auf einem ersten Ende des Streifens (24) eine erste Markierung, Vorderflankenmarkierung ($F_1$) genannt, und auf einem zweiten Ende des Streifens (24) eine zweite Markierung, Hinterflankenmarkierung ($F_2$) genannt, angebracht werden,
   - der Streifen (24) zur Form (46) hin in einer Längsrichtung angetrieben wird,
   - das erste Ende des Streifens (24) auf der Form (46) angeordnet wird,
   - die Form (46) angetrieben wird, um den Streifen (24) auf die Form (46) zu wickeln,

   **dadurch gekennzeichnet, dass**

   - in einem ersten Schritt die Antriebe des Streifens (24) und der Form (46) synchronisiert werden, so dass die Bewegungsgeschwindigkeiten der Hinterflankenmarkierung ($F_2$) und der Vorderflankenmarkierung ($F_1$) im Wesentlichen identisch sind, um die Länge des Streifens (24) nicht zu ändern,
   - in einem zweiten Schritt die Antriebe des Streifens (24) und der Form (46) in Abhängigkeit von der Winkelposition der Form (46) am Ende des ersten Schrittes und der Position der Hinterflankenmarkierung ($F_2$) so gesteuert werden, dass sich die Bewegungsgeschwindigkeiten der Hinterflankenmarkierung ($F_2$) und der Vorderflankenmarkierung ($F_1$) relativ zueinander ändern, um die Längenänderungen des Streifens (24) auszugleichen.

2. Verfahren zum Wickeln nach Anspruch 1, wobei:

   - der Streifen (24) durch Zerschneiden einer endlosen Gummibahn (28) ausgebildet wird, um aufeinander folgende stromaufwärtige (52) und stromabwärtige (24) Streifen auszubilden, und
   - das stromaufwärtige Ende des stromabwärtigen Streifens (24) und das stromabwärtige Ende des stromaufwärtigen Streifens (52) gleichzeitig markiert werden, so dass die auf dem stromaufwärtigen Ende des stromabwärtigen Streifens (24) angebrachte Markierung der Hinterflankenmarkierung ($F_2$) des stromabwärtigen Streifens entspricht und die auf dem stromabwärtigen Ende des stromaufwärtigen Streifens (52) angebrachte Markierung der Vorderflankenmarkierung ($F_1$) des stromaufwärtigen Streifens (52) entspricht.

3. Verfahren zum Wickeln nach Anspruch 1 oder 2, wobei, wenn das erste Ende des Streifens (24) auf einer ersten vorbestimmten Position der Form, Referenzposition (R) genannt, angeordnet ist, das Ende des ersten Schrittes durch die Erkennung der Vorderflankenmarkierung ($F_1$) an einer zweiten vorbestimmten Position auf der Form (46), Erkennungsposition (T) genannt, bestimmt wird.

4. Verfahren zum Wickeln nach Anspruch 3, wobei die Erkennungsposition (T) und die Referenzposition (R) auf der Form durch einen vorbestimmten Winkel A getrennt sind, der zwischen 10° und 90° liegt.

5. Verfahren zum Wickeln nach einem der vorhergehenden Ansprüche, wobei,

   - wenn N eine vorbestimmte Rotationswinkelgeschwindigkeit der Form (46) ist,
   - $E_1$ die Länge des Streifens (24) zwischen der Hinterflankenmarkierung ($F_2$) und der Vorderflankenmarkierung ($F_1$) ist, und
   - D der Winkel des sich zwischen der Hinterflankenmarkierung ($F_2$) und der Vorderflankenmarkierung ($F_1$) erstreckenden Sektors ist, den man erhalten möchte, nachdem der Streifen (24) vollständig auf die Form (46) gewickelt ist,

   die Bewegungsgeschwindigkeit $V_1$ der Hinterflankenmarkierung ($F_2$) während des ersten Schrittes durch die folgende Beziehung bestimmt wird:

   $$V_1 = N * E_1 / (360 - D).$$

6. Verfahren zum Wickeln nach einem der vorhergehenden Ansprüche, wobei, wenn das erste Ende des Streifens (24) auf einer ersten vorbestimmten Position der Form, Referenzposition (R) genannt, angeordnet ist, das Ende des zweiten Schrittes dem Zeitpunkt entspricht, zu dem die Form (24) einen vorbestimmten zusätzlichen Sektor mit dem Winkel B durchlaufen hat und noch einen vorbestimmten zusätzlichen Sektor mit dem Winkel C durchlaufen muss, bevor sie in die Referenzposition (R) zurückkehrt.

7. Verfahren zum Wickeln nach Anspruch 6, wobei der Winkel B zwischen 90° und 260° liegt.

8. Verfahren zum Wickeln nach Anspruch 7, wobei der Winkel C zwischen 90° und 180° liegt.

9. Verfahren zum Wickeln nach einem der Ansprüche 6 bis 8, wobei,

- wenn N eine vorbestimmte Rotationswinkelgeschwindigkeit der Form (46) ist,
- $E_2$ eine Variable ist, die der Länge des Teils des Streifens (24) entspricht, der im zweiten Schritt noch um die Form (46) zu wickeln ist,
- $\Omega$ der Rotationswinkel der Form (46) am Ende des ersten Schrittes ist,
- $L_0$ die Länge der neutralen Faser des Streifens (24) ist,

die Bewegungsgeschwindigkeit $V_2$ der Hinterflankenmarkierung ($F_2$) während des zweiten Schrittes durch die folgende Beziehung bestimmt wird:

$$V_2 = N * [E_2 - (C * L_0/360) / (360 - \Omega - C - D)].$$

10. Verfahren zum Wickeln nach einem der vorhergehenden Ansprüche, wobei in einem dritten Schritt die Antriebe des Streifens (24) und der Form (46) synchronisiert werden, um die Restspannungen im Streifen (24) zu beseitigen.

11. Verfahren zum Wickeln nach den Ansprüchen 6 und 10 in Kombination, wobei,

- wenn N eine vorbestimmte Rotationswinkelgeschwindigkeit der Form (46) ist,
- $L_0$ die Länge der neutralen Faser des Streifens ist,

die Antriebsgeschwindigkeit $V_3$ des Streifens (24) im dritten Schritt durch die folgende Beziehung bestimmt wird:

$$V_3 = N * L_0/360.$$

12. Verfahren zum Wickeln nach Anspruch 10 oder 11, wobei am Ende des dritten Schrittes die Positionen der Vorderflankenmarkierung ($F_1$) und der Hinterflankenmarkierung ($F_2$) bestimmt werden und der Winkel des Sektors, der sie trennt, mit einem gewünschten Winkel D verglichen wird.

13. Anlage (20) zum Wickeln eines Gummistreifens (24) auf eine Rotationsform (46), umfassend:

- eine Vorrichtung zur Ausbildung (22) eines Streifens (24) von vorbestimmter Länge,
- eine Vorrichtung zur Anbringung (50), auf einem ersten Ende des Streifens (24), einer ersten Markierung, Vorderflankenmarkierung ($F_1$) genannt, und, auf einem zweiten Ende des Streifens (24), einer zweiten Markierung, Hinterflankenmarkierung ($F_2$) genannt,
- eine erste Vorrichtung zum Antrieb (45) des Streifens (24) zur Form (46) hin in einer Längsrichtung,
- eine Greifvorrichtung (30), die in der Lage ist, das erste Ende ($E_1$) des Streifens (24) auf der Form (46) anzuordnen,
- eine zweite Vorrichtung zum Antrieb (54) der Form (46), um den Streifen (24) auf die Form (46) zu wickeln,

**dadurch gekennzeichnet, dass** sie außerdem umfasst:

- eine Synchronisationsvorrichtung (55), die in einem ersten Schritt die erste Antriebsvorrichtung (45) und die zweite Antriebsvorrichtung (54) synchronisiert, so dass die Bewegungsgeschwindigkeiten der Hinterflankenmarkierung ($F_2$) und der Vorderflankenmarkierung ($F_1$) im Wesentlichen identisch sind, um die Länge des Streifens (24) nicht zu ändern,
- eine Steuerungsvorrichtung (55), die in einem zweiten Schritt die erste Antriebsvorrichtung (45) und die zweite Antriebsvorrichtung (55) in Abhängigkeit von der Winkelposition der Form (46) am Ende des ersten Schrittes und der Position der Hinterflankenmarkierung ($F_2$) so steuert, dass sich die Bewegungsgeschwindigkeiten der Hinterflankenmarkierung ($F_2$) und der Vorderflankenmarkierung ($F_1$) relativ zueinander ändern, um die Längenänderungen des Streifens (24) auszugleichen.

14. Anlage (20) zum Wickeln nach Anspruch 13, welche außerdem einen Sensor zur Erkennung (56) der Position der Vorderflankenmarkierung ($F_1$) und einen Sensor für die Winkelposition (60) der Form (46) umfasst.

15. Anlage (20) zum Wickeln nach Anspruch 13 oder 14, wobei die Steuerungsvorrichtung (55) einen Echtzeitsensor (62) für die Position der Hinterflankenmarkierung ($F_2$) umfasst.

16. Anlage (20) zum Wickeln nach Anspruch 14 und 15 in Kombination, wobei die Steuerungsvorrichtung (55) eine Steuereinheit (64) umfasst, welche die Geschwindigkeiten der ersten und der zweiten Antriebsvorrichtung (45, 54) in Abhängigkeit von den Informationen steuert, die sie von dem Erkennungssensor (56), dem Winkelpositionssensor (60) und dem Echtzeitsensor (62) für die Position der Hinterflankenmarkierung ($F_2$) empfängt.

17. Anlage (20) zum Wickeln nach Anspruch 15 oder 16, wobei der Echtzeitsensor (62) für die Position der Hinterflankenmarkierung ($F_2$) an der Greifvorrichtung (30) angeordnet ist.

**Claims**

1. Method for winding a strip (24) of rubber onto a form of revolution (46), in which:

      - a strip (24) of predetermined length is formed,
      - a first mark, known as the front edge mark ($F_1$), is placed on a first end of the strip (24), and a second mark, known as the rear edge mark ($F_2$), is placed on a second end of the strip (24),
      - the strip (24) is driven longitudinally towards the form (46),
      - the first end of the strip (24) is arranged on the form (46),
      - the form (46) is driven so as to wind the strip (24) onto the form (46),

   **characterized in that**

      - in a first step, the driving of the strip (24) and the form (46) is synchronized such that the speed of displacement of the rear edge mark ($F_2$) and the front edge mark ($F_1$) are substantially identical so as not to modify the length of the strip (24),
      - in a second step, the driving of the strip (24) and the form (46) is pilot-controlled depending on the angular position of the form (46) at the end of the first step and on the position of the rear edge mark ($F_2$) such that the speed of displacement of the rear edge mark ($F_2$) and the front edge mark ($F_1$) vary relative to each other so as to compensate the variations in the length of the strip (24).

2. Winding method according to claim 1, in which:

      - the strip (24) is formed by cutting a continuous web (28) of rubber so as to form successive upstream (52) and downstream (24) strips, and
      - the upstream end of the downstream strip (24) and the downstream end of the upstream strip (52) are marked simultaneously so that the mark applied to the upstream end of the downstream strip (24) corresponds to the rear edge mark ($F_2$) of the downstream strip, and that the mark applied to the downstream end of the upstream strip (52) corresponds to the front edge mark ($F_1$) of the upstream strip (52).

3. Winding method according to claim 1 or 2, in which, with the first end of the strip (24) arranged on a first predetermined position of the form, known as the reference position (R), the end of the first step is determined by detecting the front edge mark ($F_1$) at a second predetermined position on the form (46), known as the detection position (T).

4. Winding method according to claim 3, in which the detection position (T) and the reference position (R) are separated on the form by a predetermined angle A of between 10° and 90°.

5. Winding method according to any of the preceding claims, in which,

- N is a predetermined angular rotational speed of the form (46),
- $E_1$ is the length of the strip (24) between the rear edge ($F_2$) and front edge ($F_1$) marks, and
- D is the angle of the sector, extending between the rear edge mark ($F_2$) and the front edge mark ($F_1$), which it is desired to obtain once the whole strip (24) has been wound onto the form (46),

the speed $V_1$ of displacement of the rear edge mark ($F_2$) during the first step is determined by the following equation:

$$V_1 = N * E_1 / (360 - D).$$

6. Winding method according to any of the preceding claims, in which, with the first end of the strip (24) arranged on a first predetermined position of the form, known as the reference position (R), the end of the second step corresponds to the point in time at which the form (24) has travelled through a sector of a predetermined supplementary angle B and still needs to travel through a sector of predetermined supplementary angle C before returning to the reference position (R).

7. Winding method according to claim 6, in which the angle B is between 90° and 260°.

8. Winding method according to claim 7, in which the angle C is between 90° et 180°.

9. Winding method according to any of claims 6 to 8, in which, where

- N is a predetermined angular rotational speed of the form (46),
- $E_2$ is a variable corresponding to the length of the remaining part of the strip (24) to be wound around the form (46) during the second step,
- $\Omega$ is the angle of rotation of the form (46) at the end of the first step,
- $L_0$ is the length of the neutral fibre of the strip (24),

the speed $V_2$ of displacement of the rear edge mark ($F_2$) during the second step is determined by the following equation:

$$V_2 = N * [E_2 - (C* L_0/360) / (360 - \Omega - C - D)].$$

10. Winding method according to any of the preceding claims, in which, during a third step, the driving of the strip (24) and the form (46) is synchronized so as to eliminate the residual strain in the strip (24).

11. Winding method according to claims 6 and 10 combined, in which,

- N is a predetermined angular rotational speed of the form (46),
- $L_0$ is the length of the neutral fibre of the strip,

the driving speed $V_3$ of the strip (24) in the third step is determined by the following equation:

$$V_3 = N * L_0 /360.$$

12. Winding method according to claim 10 or 11, in which, at the end of the third step, the position of the front edge ($F_1$) and rear edge ($F_2$) marks is determined and the angle of the sector which separates them is compared with a desired angle D.

13. Installation (20) for winding a strip (24) of rubber onto a form of revolution (46), comprising:

- a device (22) for forming a strip (24) of predetermined length,
- a device (50) for applying a first mark, known as the front edge mark ($F_1$), to a first end of the strip (24), and a second mark, known as the rear edge mark ($F_2$), to a second end of the strip (24),
- a first device (45) for driving the strip (24) towards the form (46) longitudinally,

- a gripping device (30) capable of arranging the first end ($E_1$) of the strip (24) on the form (46),
- a second device (54) for driving the form (46) in order to wind the strip (24) onto the form (46),

**characterized in that it** furthermore comprises:

- a synchronization device (55) which, during a first step, synchronizes the first driving device (45) and the second driving device (54) such that the speeds of displacement of the rear edge mark ($F_2$) and the front edge mark ($F_1$) are substantially identical so as not to modify the length of the strip (24),
- a pilot-control device (55) which, during a second step, pilot-controls the first driving device (45) and the second driving device (55) depending on the angular position of the form (46) at the end of the first step and on the position of the rear edge mark ($F_2$) such that the speeds of displacement of the rear edge mark ($F_2$) and the front edge mark ($F_1$) vary relative to each other so as to compensate the variations in length of the strip (24).

14. Installation (20) according to claim 13, furthermore comprising a sensor (56) for detecting the position of the front edge mark ($F_1$) and a sensor (60) for the angular position of the form (46).

15. Installation (20) according to claim 13 or 14, in which the pilot-control device (55) comprises a sensor (62) for the position in real time of the rear edge mark ($F_2$).

16. Installation (20) according to claims 14 and 15 combined, in which the pilot-control device (55) comprises a controller (64) pilot-controlling the speed of the first and second driving devices (45, 54) depending on the data received from the detection sensor (56), from the angular position sensor (60), and from the sensor (62) for the position in real time of the rear edge mark ($F_2$).

17. Installation (20) according to claim 15 or 16, in which the sensor (62) for the position in real time of the rear edge mark ($F_2$) is arranged on the gripping device (30).

**Fig. 1**

**Fig. 2**

**Fig. 3**

**Fig. 4**

**Fig. 5**

**Fig. 6**

**Fig. 7**

17

**Fig. 8**

**Fig. 9**

**Fig. 10**

**Fig. 11**

**Fig. 12**

**EP 3 390 031 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2003011245 A